# EUROPÄISCHE PATENTSCHRIFT

(11) **EP 4 032 796 B1**
(45) Veröffentlichungstag und Bekanntmachung des Hinweises auf die Patenterteilung: **03.12.2025**
(21) Anmeldenummer: 21205163.5
(22) Anmeldetag: 28.10.2021
(51) Int. Cl.: B62M 6/55, B62M 11/06, F16H 3/091, F16H 3/10

(54) **TRETLAGERSCHALTUNG FÜR EIN ELEKTROFAHRRAD UND ELEKTROFAHRRAD MIT EINER SOLCHEN TRETLAGERSCHALTUNG**
BOTTOM BRACKET GEAR SHIFT DEVICE FOR AN ELECTRIC BICYCLE AND ELECTRIC BICYCLE PROVIDED WITH SUCH A DEVICE
DISPOSITIF DE CHANGEMENT DE VITESSES DE PÉDALIER POUR UNE BICYCLETTE ÉLECTRIQUE ET BICYCLETTE ÉLECTRIQUE DOTÉE D'UN TEL DISPOSITIF

(30) Priorität: 22.01.2021 DE 102021101415
(43) Veröffentlichungstag der Anmeldung: 27.07.2022
(73) Patentinhaber: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB

(56) Entgegenhaltungen:
- CN-A- 106 627 971
- DE-A1- 102012 023 150
- DE-A1- 102012 209 096
- DE-A1- 102013 113 524
- DE-A1- 102013 206 710
- DE-A1- 102014 106 591
- DE-U1- 202014 101 700

## Beschreibung

Die Erfindung betrifft eine Tretlagerschaltung eines Elektrofahrrads sowie ein Elektrofahrrad mit einer solchen Tretlagerschaltung, wobei die Tretlagerschaltung eine Tretlagerwelle, ein Schaltgetriebe und am Getriebeeingang des Schaltgetriebes eine Eingangsstufe aufweist, wobei die Eingangsstufe zwischen der Tretlagerwelle und dem Schaltgetriebe angeordnet und als eine Übersetzung ins Schnelle ausgebildet ist, wobei die Eingangsstufe ein abtriebsseitiges Eingangsrad auf einer Eingangswelle des Schaltgetriebes und ein antriebsseitiges, zur Tretlagerwelle koaxiales Eingangsrad aufweist, wobei das antriebsseitige Eingangsrad auf einer eingangsseitigen Hohlwelle sitzt, die auf der Tretlagerwelle gelagert ist, wobei die Tretlagerschaltung eine ausgangsseitige Hohlwelle aufweist, an der ein Antriebsrad für ein zu einem Hinterrad des Elektrofahrrades reichendes Zugmittel anbringbar ist, und wobei die Tretlagerwelle koaxial in der ausgangsseitigen Hohlwelle verläuft. Der Ausdruck "zwischen" bezieht sich dabei auf den Kraftfluss durch die Tretlagerschaltung.

Elektrofahrräder weisen einen Hilfsantrieb auf, der die Tretbewegung eines Radfahrers unterstützt. Eine Gangschaltung sorgt beim Elektrofahrrad dafür, dass über einen weiten Geschwindigkeitsbereich mit etwa gleichbleibender Trittfrequenz pedaliert werden kann.

Der Hilfsantrieb sitzt bei den hier betrachteten Elektrofahrrädern am Tretlager. Bei dieser Konfiguration kommen üblicherweise Kettenschaltungen oder Nabenschaltungen zum Einsatz, weil am Tretlager nicht ausreichend Platz zur Verfügung steht. Kettenschaltungen sind jedoch insofern nachteilig, als die Komponenten der Gangschaltung, nämlich die Ritzel an der Hinternabe, das wenigstens eine Kettenblatt sowie die Kette nebst Kettenumwerfer ungeschützt sind und daher leicht verschmutzen. Eine Kettenschaltung ist daher vergleichsweise wartungsintensiv.

Nabenschaltungen werden anstelle von oder zusammen mit Kettenschaltungen am Hinterrad verwendet. Die Nabenschaltungen sind von der Außenumgebung abgekapselt in einem Gehäuse angeordnet und daher weitgehend wartungsfrei. Nachteilig ist jedoch bei Nabenschaltungen das hohe Gewicht am Hinterrad, das zu einer ungünstigen Gewichtsverteilung führt. Nicht nur beim Tragen, sondern auch in Kurvenfahrten oder bei sportlicher Fahrt im Gelände ist das hohe Gewicht an der Hinterradnabe störend.

Eine deutlich vorteilhaftere Gewichtsverteilung ergibt sich, wenn die Gangschaltung mittig im Fahrrad positioniert ist, wie dies beispielsweise bei Tretlagerschaltungen der Fall ist. Allerdings sind Tretlagerschaltungen recht groß, so dass um das Tretlager herum kein Platz für den Elektromotor bleibt. Zudem sind die Tretlagerschaltungen von sich aus bereits so schwer, dass das zusätzliche Gewicht eines Hilfsantriebs zu einem Elektrofahrrad führen würde, das für den Alltag oder für die Weiterfahrt bei leerer Batterie zu schwer wäre.

Aus der DE 10 2012 209096 A1 ist ein Fahrradgetriebe für ein Fahrrad mit Hilfsmotor bekannt, bei dem die Tretkurbelwelle des Fahrrads über ein Summierungsgetriebe mit dem Fahrradgetriebe verbunden ist, wobei die eingangsseitige Hohlwelle und die ausgangsseitige Hohlwelle überlappend nebeneinander auf der Tretlagerwelle angeordnet sind. Aus der DE 10 2012 023 150 A1, DE 10 2014 106 591 A1, DE 10 2013 206 710 A1, DE 10 2013 113 524 A1 und DE 20 2014 101 700 U1 sind Tretlagergetriebe bekannt, die jeweils eine Eingangsstufe mit einem großen drehfest auf der Tretkurbelwelle gelagerten Zahnrad und einem kleinen antriebsseitigen Zahnrad am Schaltgetriebe aufweisen. Die CN 106627971 A zeigt eine Tretlagerschaltung nach dem Oberbegriff des Anspruchs 1.

Es besteht also Bedarf an einer Tretlagerschaltung eines Elektrofahrrads, die so klein baut, dass sie mit einem Hilfsantrieb am Tretlager kombiniert werden kann, und die ein nur geringes Gewicht aufweist.

Die Erfindung löst dieses Problem. Die Erfindung ist im beigefügten Anspruchssatz beschrieben. Sie stellt eine Tretlagerschaltung für ein Elektrofahrrad mit Hilfsantrieb, insbesondere in Form eines Mittelmotors, bereit, wobei die eingangsseitige Hohlwelle und die ausgangsseitige Hohlwelle in einer axialen Richtung der Tretlagerwelle ohne sich zu überlappen nebeneinander liegen, wobei die eingangsseitige Hohlwelle und die ausgangsseitige Hohlwelle nebeneinander auf der Tretlagerwelle angeordnet sind, dadurch gekennzeichnet, dass zwischen der Eingangsstufe und der Tretlagerwelle ein Freilauf angeordnet ist.

Durch die als Übersetzung ausgestaltete Eingangsstufe verringert sich das im Schaltgetriebe zu übertragende Drehmoment, da das Schaltgetriebe schneller dreht. Bei gleicher Leistung muss also ein geringeres Drehmoment übertragen werden. Das verringerte Drehmoment ermöglicht es, die Zahnräder kleiner und leichter auszugestalten. Überraschenderweise ist der Gewichtsvorteil, der sich aus den leichteren Zahnrädern des Schaltgetriebes ergibt, größer als das zusätzliche Gewicht der Eingangsstufe.

Der Freilauf verhindert, dass der Elektromotor die Beine des Radfahrers antreiben kann. Der Freilauf trennt die Tretlagerwelle vom antriebsseitigen Eingangsrad , wenn die Drehzahl des antriebsseitigen Eingangsrades größer ist als die Drehzahl der Tretlagerwelle. Das ist zum Beispiel der Fall, wenn der Nutzer des Fahrrades plötzlich aufhört zu treten. Sobald die Drehzahl der Tretlagerwelle wieder auf die Drehzahl des antriebsseitigen Eingangsrad angestiegen ist, koppelt der Freilauf selbsttätig ein und die Tretenergie des Fahrradfahrers wird in die Eingangsstufe eingeleitet.

Die Erfindung kann anhand der nachstehend geschilderten weiteren Ausgestaltungen weiter verbessert werden. Die einzelnen Ausgestaltungen sind dabei unabhängig voneinander vorteilhaft und beliebig miteinander kombinierbar.

Um beispielsweise das Schaltgetriebe besonders klein und leicht zu bauen und gleichzeitig den Drehimpuls der Zahnräder im Schaltgetriebe nicht zu groß werden zu lassen, ist es von Vorteil, wenn das Übersetzungsverhältnis der Eingangsstufe zwischen 3:1 und 5:1 liegt. Mit einem Übersetzungsverhältnis in diesem Bereich bleibt die Eingangsstufe recht kompakt.

Die Eingangsstufe weist ein abtriebsseitiges Eingangsrad auf einer Eingangswelle des Schaltgetriebes und ein antriebsseitiges, mittelbar auf der Tretlagerwelle sitzendes Eingangsrad auf. Dies führt zu einer konstruktiv einfachen Ausgestaltung.

Bevorzugt kämmen das antriebsseitige und das abtriebsseitige Eingangsrad unmittelbar miteinander, jedoch können auch ein oder mehrere weitere Eingangsräder zwischen dem antriebsseitigen und dem abtriebsseitigen Eingangsrad kämmend vorhanden sein.

Zwischen dem Freilauf und dem ersten Eingangsrad kann ein Drehzahl- und/oder Drehgeschwindigkeitssensor, und/oder ein Drehmomentsensor angeordnet sein, dessen Signal zur Steuerung des Hilfsantriebs verwendet werden kann.

Das antriebsseitige Eingangsrad ist auf einer eingangsseitigen Hohlwelle angebracht, in der die Tretlagerwelle aufgenommen ist. Die Hohlwelle ist auf der Tretlagerwelle gelagert.

Die eingangsseitige Hohlwelle und die Tretlagerwelle verlaufen koaxial zueinander. Die Verwendung einer eingangsseitigen Hohlwelle ermöglicht konstruktiv größere Freiheiten. Beispielsweise ist es konstruktiv einfacher, den Freilauf und/oder den Drehzahl-/Drehgeschwindigkeits- und/oder Drehmomentsensor an der Hohlwelle anzubringen. Bei Verwendung der Hohlwelle sitzt das antriebsseitige Eingangsrad mittelbar auf der Tretlagerwelle.

In einer nicht beanspruchten Ausgestaltung kann das antriebsseitige Eingangsrad jedoch auch unmittelbar auf der Tretlagerwelle sitzen. In diesem Fall kann auf einen Freilauf verzichtet werden, oder der Freilauf ist in das Eingangsrad integriert. Ebenso ist es möglich, dass sich der Freilauf an anderer Position zwischen Tretlagerwelle und Hilfsantrieb befindet. Der Verzicht auf die bezüglich des Schaltgetriebes eingangsseitige Hohlwelle führt zu einer größeren Gewichtersparnis.

Die Eingangsstufe, insbesondere das antriebsseitige Eingangsrad, ist bevorzugt ausgestaltet, sowohl von der Tretlagerwelle als auch vom Hilfsantrieb angetrieben zu werden. Insbesondere kann das antriebsseitige Eingangsrad sich mit dem Hilfsantrieb bzw. einem Untersetzungsgetriebe des Hilfsantriebs im Eingriff befinden. Darüber hinaus ist das antriebsseitige Eingangsrad mit der Tretlagerwelle verbunden, gegebenenfalls unter Zwischenschaltung eines Freilaufs. Damit laufen an der Eingangsstufe, insbesondere am antriebsseitigen Eingangsrad, die Kraftflüsse von den Pedalen und vom Hilfsantrieb zusammen.

Der Hilfsantrieb weist einen Hilfsmotor auf, bevorzugt einen Elektromotor. Der Hilfsantrieb kann ferner ein Untersetzungsgetriebe aufweisen. Das Untersetzungsgetriebe ist oft als eine bauliche Einheit mechanisch passend zum Hilfsmotor bzw. dessen Gehäuse ausgestaltet. Hilfsmotor und Untersetzungsgetriebe können handelsübliche Produkte sein. Vorteilhaft, jedoch nicht zwingend ist ein zweiter Freilauf, der vor oder in dem Untersetzungsgetriebe des Hilfsantriebs angeordnet ist . Dieser Freilauf sorgt dafür, dass der Fahrradfahrer beim starken Pedalieren nicht den elektrischen Hilfsantrieb als Generator betreibt.

Um den Hilfsantrieb mit der Eingangsstufe zu koppeln, kann die Tretlagerschaltung, insbesondere ein Gehäuse der Tretlagerschaltung, eine mechanische Schnittstelle zur Anbringung des Hilfsantriebs an der Tretlagerschaltung aufweisen. Eine solche Schnittstelle kann beispielsweise ein Flansch sein. Je nach Hilfsantrieb und/oder Hersteller können die mechanischen Schnittstellen unterschiedliche Ausgestaltungen aufweisen.

Der Ausgang der Tretlagerschaltung, an dem die Tretleistung des Radfahrers, gegebenenfalls kombiniert mit der Antriebsleistung des Hilfsantriebs, zum Antrieb des Hinterrads des Elektromotors abgegriffen werden kann, ist koaxial zur Tretlagerwelle angeordnet.

Am Getriebeausgang des Schaltgetriebes kann eine Ausgangsstufe mit einem abtriebsseitigen Ausgangsrad vorgesehen sein. Das abtriebsseitige Ausgangsrad sitzt bevorzugt auf einer ausgangsseitigen Hohlwelle und ist insbesondere mit dieser drehstarr verbunden. In der ausgangsseitigen Hohlwelle ist die Tretlagerwelle aufgenommen, insbesondere ist diese ausgangsseitige Hohlwelle im Gehäuse und zur Tretlagerwelle gelagert. Die ausgangsseitige Hohlwelle und die Tretlagerwelle verlaufen koaxial.

Die ausgangsseitige Hohlwelle ist bevorzugt nach außerhalb der Tretlagerschaltung geführt und ausgestaltet, ein Antriebsmittel wie beispielsweise ein Kettenblatt oder eine Riemenscheibe aufzunehmen. Das Antriebsmittel treibt im Elektrofahrrad über ein Zugmittel, beispielsweise eine Kette oder einen Zahnriemen, das Hinterrad an. Die ausgangsseitige Hohlwelle bildet somit den Ausgang der Tretlagerschaltung.

Ein antriebsseitiges Ausgangsrad der Ausgangsstufe befindet sich im Eingriff mit dem abtriebsseitigen Ausgangsrad. Das antriebsseitige Ausgangsrad kann auf der Ausgangswelle des Schaltgetriebes sitzen. Das antriebsseitige und das abtriebsseitige Ausgangsrad kämmen vorteilhafterweise direkt miteinander, wobei alternativ wenigstens ein weiteres Ausgangsrad zwischen dem antriebsseitigen und dem abtriebsseitigen Ausgangsrad kämmend angeordnet sein kann. Aus Gewichtsgründen ist jedoch bevorzugt, dass lediglich zwei Ausgangsräder in der Ausgangsstufe vorhanden sind.

Um Platz zu sparen, sind die eingangsseitige und die ausgangsseitige Hohlwelle in axialer Richtung der Tretlagerwelle nebeneinander angeordnet.

In einer weiteren Variante treibt der Hilfsantrieb nicht die Eingangsstufe, sondern die Ausgangsstufe, insbesondere das abtriebsseitige Ausgangsrad der Ausgangsstufe unmittelbar an. Diese Ausgestaltung hat den Vorteil, dass die Leistung des Motors mit weniger Verlusten am Ausgang zur Verfügung gestellt werden kann. Der Hilfsantrieb bzw. dessen Untersetzungsgetriebe befinden sich direkt im Eingriff mit dem abtriebsseitigen Ausgangsrad. Bei dieser Ausgestaltung kann zwischen dem antriebsseitigen Ausgangsrad und dem Hilfsantrieb ein Freilauf angeordnet sein, dessen Funktion der des oben im Zusammenhang mit der Eingangsstufe beschriebenen Freilaufs entspricht. Auf einen Freilauf an der Eingangsstufe und auf eine eingangsseitige Hohlwelle kann bei dieser Ausgestaltung verzichtet werden, so dass sie den Bau einer besonders leichten Tretlagerschaltung ermöglicht. Allerdings sollte bei dieser Ausgestaltung bevorzugt ein Hilfsantrieb verwendet werden, der bereits bei geringer Drehzahl ein hohes Antriebsmoment liefert.

Die Ausgangsstufe ist bevorzugt als eine Untersetzung ausgestaltet, so dass an der ausgangsseitigen Hohlwelle hohe Drehmomente abgegriffen werden können. Das Untersetzungsverhältnis der Ausgangsstufe kann zwischen 1:2 und 1:4 betragen.

Das Produkt aus dem Untersetzungsverhältnis der Ausgangsstufe und dem Übersetzungsverhältnis der Eingangsstufe liegt vorteilhaft zwischen 0,7 und 1,5. Bevorzugt ist das Produkt jedoch größer als 1. Die gesamte Tretlagerschaltung ist bei dieser Ausgestaltung also als eine Übersetzung der Drehbewegung der Tretlagerwelle ins Schnelle ausgestaltet und erlaubt bei üblichen Gangabstufungen des Schaltgetriebes die Verwendung etwa gleich großer Kettenblätter oder Zahnriemenscheiben an Tretlager und Hinterradnabe.

Die Tretlagerschaltung kann ein Gehäuse aufweisen, in dem wenigstens die Tretlagerwelle sowie das antriebsseitige Eingangsrad und das abtriebsseitige Ausgangsrad mit den sie tragenden Wellen aufgenommen sind. Bevorzugt ist auch der Hilfsantrieb, gegebenenfalls mit Untersetzungsgetriebe, und/oder das Schaltgetriebe im Gehäuse der Tretlagerschaltung aufnehmbar oder aufgenommen sind. Im fertig montierten Zustand sind bevorzugt die Tretlagerwelle, das Schaltgetriebe, der Hilfsantrieb und die Eingangs- und Ausgangsstufe insbesondere innerhalb des Gehäuses baulich vereint. Die Tretlagerschaltung ist auf diese Weise mit Hilfsantrieb und Schaltgetriebe vormontierbar bzw. vormontiert und einstückig handhabbar ausgestaltet.

Das Gehäuse der Tretlagerschaltung ist bevorzugt als strukturelle Komponente eines Rahmens des Elektrofahrrads ausgestaltet, um den Rahmen im Bereich des Tretlagers zu versteifen und leichter zu machen.

Der Hilfsantrieb, gegebenenfalls mit Untersetzungsgetriebe, kann Teil der Tretlagerschaltung sein. Ist ein Hilfsantrieb vorgesehen, so treibt er bevorzugt die Eingangs- oder Ausgangsstufe unmittelbar an.

Das Schaltgetriebe weist wenigstens eine Eingangswelle und eine Ausgangswelle auf. Ferner kann wenigstens eine weitere Getriebewelle, beispielsweise in Form einer Zwischenwelle vorhanden sein. Das Schaltgetriebe weist zwei oder mehr Schaltstufen auf, die mit Freiläufen und Schaltkupplungen versehen sein können, um verschiedene Gänge beispielsweise mit Hilfe eines an einem Lenker des Elektrofahrrades angebrachten Schaltelements zu schalten. Das Schaltgetriebe ist bevorzugt versetzt zur Tretlagerwelle angeordnet. Das Schaltgetriebe sollte wenigstens vier, bevorzugt wenigstens neun Gänge aufweisen. Die Getriebewellen verlaufen bevorzugt parallel zur Tretlagerwelle.

Um Platz zu sparen, können das Schaltgetriebe und/oder der Hilfsantrieb in axialer Richtung der Tretlagerwelle wenigstens teilweise zwischen der Eingangsstufe und der Ausgangsstufe angeordnet sein. Hierzu können die Eingangswelle und die Ausgangswelle an sich gegenüberliegenden Seiten des Schaltgetriebes vom Schaltgetriebe vorspringen bzw. von außerhalb des Schaltgetriebes zugänglich angeordnet sein. Die Eingangswelle und die Ausgangswelle können auch auf der gleichen Seite des Schaltgetriebes vorspringen. Schaltgetriebe und Hilfsantrieb können auch wenigstens teilweise in axialer Richtung der Tretlagerwelle überlappend nebeneinander angeordnet sein.

Gemäß einer weiteren Ausgestaltung weist die Tretlagerschaltung mindestens vier achsparallel zueinander angeordnete Wellen, darunter beispielsweise die Tretlagerwelle, die Eingangswelle, die Ausgangswelle und/oder eine weitere Getriebewelle des Schaltgetriebes, auf, die mittelbar oder unmittelbar im Gehäuse der Tretlagerschaltung gelagert sind.

Das Gehäuse der Tretlagerschaltung kann wenigstens zwei zusammengefügte und/oder zusammenfügbare Gehäuseteile aufweisen. Dies vereinfacht die Wartung und Reparatur der Tretlagerschaltung, da durch Abnahme eines Gehäuseteils, das beispielsweise als Deckel oder Kappe ausgestaltet ist, der Zugang ins Innere des Gehäuses möglich ist.

Mindestens zwei Wellen, insbesondere die Tretlagerwelle und die Ausgangswelle oder eine Hohlwelle, kann auf mindestens einer Seite aus dem Gehäuse herausgeführt sein.

Gemäß einer weiteren Ausgestaltung ist mindestens eine Welle der Tretlagerschaltung auf zwei Seiten aus dem Gehäuse herausgeführt. Bei dieser Welle kann es sich insbesondere um die Tretlagerwelle handeln.

Wenigstens eine Welle der Tretlagerschaltung, beispielsweise die Tretlagerwelle, die Eingangswelle, die Ausgangswelle und/oder wenigstens eine weitere Getriebewelle des Schaltgetriebes kann koaxial zum Stator und Rotor eines Elektromotors angeordnet sein.

Die Tretlagerschaltung kann in einer weiteren Ausgestaltung mindestens zwei oder mindestens drei Wellen aufweisen, auf denen jeweils mindestens zwei Zahnräder angeordnet sind. Diese drei Wellen können beispielsweise die Eingangswelle, die Ausgangswelle und wenigstens eine weitere Getriebewelle des Schaltgetriebes sein. Allerdings können auch auf der Tretlagerwelle mindestens zwei Zahnräder angeordnet sein.

Um eine ausreichende Anzahl von Gängen bereit zu stellen, können mindestens drei Zahnräder über jeweils eine Schaltkupplung und/oder wenigstens einen Freilauf mit mindestens einer Welle der Tretlagerschaltung, dies kann die Tretlagerwelle, die Ausgangswelle, die Eingangswelle oder wenigstens eine weitere Getriebewelle des Schaltgetriebes sein, verbunden sein.

Um ein Signal für die Steuerung des Hilfsantriebes bereitzustellen, kann sich an mindestens einer Welle oder mindestens einem Zahnrad der Tretlagerschaltung ein Drehzahl- oder Drehgeschwindigkeitssensor und/oder ein Drehmomentsensor befinden. Bei betriebsbereitem Elektrofahrrad ist der Drehzahl- oder Drehgeschwindigkeitssensor und/oder der Drehmomentsensor signalübertragend mit einer Steuerung des Hilfsantriebs verbunden.

Gemäß einer weiteren Ausgestaltung weist die Tretlagerschaltung mindestens eine Welle auf, auf der sämtliche Zahnräder vollständig drehfest mit der Welle verbunden sind. Diese Welle kann insbesondere wenigstens eine weitere Getriebewelle des Schaltgetriebes sein, die parallel zur Eingangswelle und/oder Ausgangswelle verläuft. Im von einem Getriebeeingang zu einem Getriebeausgang gerichteten Kraftfluss kann die Welle mit den drehfest verbundenen Zahnrädern insbesondere zwischen Eingangswelle und Ausgangswelle angeordnet sein.

Für die Gewichtsverteilung ist es von Vorteil, wenn mindestens zwei der Wellen des Schaltgetriebes, also wenigstens zwei Wellen aus der Gruppe umfassen die Eingangswelle, die Ausgangswelle und wenigstens eine weitere Getriebewelle, sich bei im Elektrofahrrad eingebauter Tretlagerschaltung in Fahrtrichtung vor der Tretlagerwelle befindet.

Schließlich können auch eine oder mehrere Wellen der Tretlagerschaltung als Hohlwelle ausgestaltet sein und koaxial zu einer oder mehreren übrigen Wellen der Tretlageschaltung angeordnet sind.

Im Folgenden ist die Erfindung unter Bezugnahme auf die beigefügten Zeichnungen anhand von beispielhaften Ausgestaltung exemplarisch erläutert. Nach Maßgabe der obigen Ausführungsformen können einzelne Merkmale weggelassen werden, sollte es auf den technischen Effekt eines Merkmals bei einer bestimmten Anwendung nicht ankommen. Umgekehrt kann ein bei einer beispielhaften Ausgestaltung nicht beschriebenes oder dargestelltes Merkmal hinzugenommen werden, wenn es auf den technischen Effekt dieses Merkmals bei einer bestimmten Anwendung ankommen sollte.

In den Zeichnungen sind für Elemente, die einander hinsichtlich Aufbau und/oder Funktion entsprechen, dieselben Bezugszeichen verwendet.

Es zeigen:
- Fig. 1: eine schematische Darstellung einer Tretlagerschaltung eines Elektrofahrrades in einer ersten Ausgestaltung;
- Fig. 2: eine schematische Darstellung einer Tretlagerschaltung eines Elektrofahrrads in einer weiteren Ausgestaltung;
- Fig. 3: eine schematische Darstellung einer Tretlagerschaltung eines Elektrofahrrads in einer weiteren Ausgestaltung, die sich vom Gegenstand des Anspruchs 1 durch den fehlenden zwischen der Eingangsstufe und der Tretlagerwelle angeordneten Freilauf unterscheidet;
- Fig. 4: eine schematische Darstellung einer Tretlagerschaltung eines Elektrofahrrads in einer weiteren Ausgestaltung, die sich vom Gegenstand des Anspruchs 1 durch den fehlenden zwischen der Eingangsstufe und der Tretlagerwelle angeordneten Freilauf unterscheidet;
- Fig. 5: eine schematische Darstellung einer Tretlagerschaltung eines Elektrofahrrads in einer weiteren Ausgestaltung;
- Fig. 6: eine schematische Darstellung eines Elektrofahrrads mit einer Tretlagerschaltung;
- Fig. 7: eine schematische Darstellung eines Schaltgetriebes der Tretlagerschaltung;
- Fig. 8: eine schematische Darstellung des Kraftflusses im Schaltgetriebes der Fig. 7 bei verschiedenen Gängen;
- Fig. 9: eine schematische Darstellung einer Tretlagerschaltung eines Elektrofahrrads in einer weiteren Ausgestaltung, die sich vom Gegenstand des Anspruchs 1 durch die fehlende ausgangsseitige Hohlwelle und durch den fehlenden, zwischen der Eingangsstufe und der Tretlagerwelle angeordneten Freilauf unterscheidet.

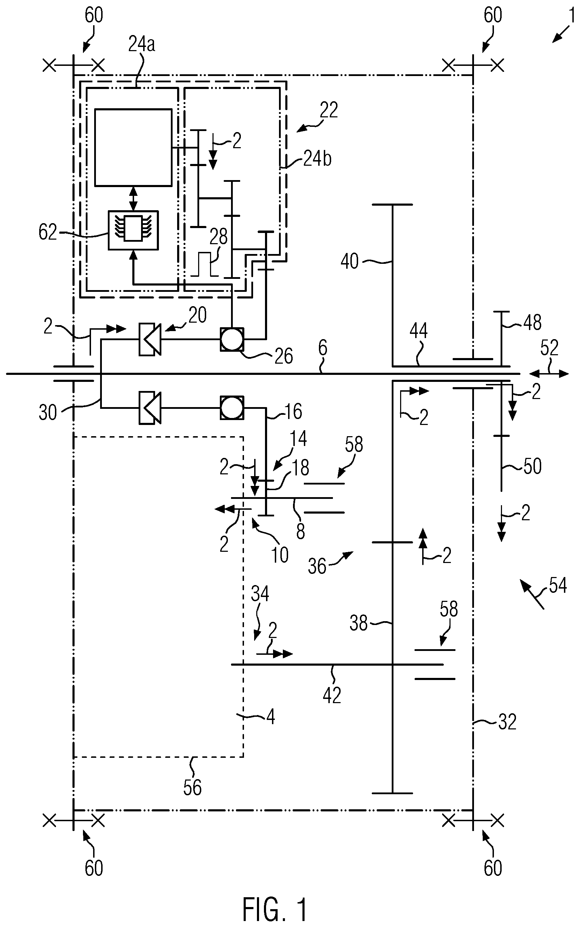

Zunächst wird der Aufbau einer möglichen Ausgestaltung einer Tretlagerschaltung 1 mit Bezug auf die Fig. 1 erläutert. Die Tretlagerschaltung 1 ist ausgestaltet, im Bereich eines Tretlagers eines Rahmens eines Elektrofahrrades mit Mittelmotor (beides in Fig. 1 nicht gezeigt) angebracht zu werden. Ein Kraftfluss durch die Tretlagerschaltung 1 ist durch den Doppelpfeil 2 angegeben.

Die Tretlagerschaltung 1 weist ein Schaltgetriebe 4 auf, das in Fig. 1 lediglich angedeutet ist. Das Schaltgetriebe 4 weist eine radial und parallel zu einer Tretlagerwelle 6 versetzt angeordnete Eingangswelle 8 auf.

Vor einem Getriebeeingang 10 des Schaltgetriebes 4 befindet sich eine Eingangsstufe 14. Die Eingangsstufe 14 ist eine Übersetzung ins Schnelle mit einem Übersetzungsverhältnis zwischen etwa 3:1 und etwa 5:1. Sie weist zwei kämmende Eingangsräder 16, 18 insbesondere in Form stirnverzahnter Zahnräder auf. Das eine, abtriebsseitige Eingangsrad 18 sitzt auf einer Eingangswelle 8 des Schaltgetriebes 4; das andere, antriebsseitige Eingangsrad 16 sitzt mittelbar oder unmittelbar auf der Tretlagerwelle 6.

Zwischen der Eingangsstufe 14 und der Tretlagerwelle 6 ist ein Freilauf 20 angeordnet Der Freilauf 20 verbindet die Tretlagerwelle 6 und die Eingangsstufe 14 drehstarr, wenn die Drehzahl der Tretlagerwelle 6 wenigstens so groß ist wie die Drehzahl des antriebsseitigen Eingangsrades 16. Ist die Drehzahl der Tretlagerwelle 6 kleiner als die Drehzahl des antriebsseitigen Eingangsrades 16 oder rückwärts gerichtet, löst sich der Freilauf 20 selbsttätig und das antriebsseitige Eingangsrad 16 kann sich unabhängig von der Tretlagerwelle 6 drehen.

Die Eingangsstufe 14, insbesondere dessen antriebsseitiges Eingangsrad 16, wird nicht nur durch die Tretlagerwelle 6, sondern auch durch einen Hilfsantrieb 22 angetrieben. Hierzu befindet sich der Hilfsantrieb 22 bevorzugt unmittelbar im Eingriff mit der Eingangsstufe 14, insbesondere dem antriebsseitigen Eingangsrad 16. Der Hilfsantrieb 22 weist einen Hilfsmotor 24a und optional ein Untersetzungsgetriebe 24b auf. Das Untersetzungsgetriebe 24b des Hilfsantriebs 22 kann als eine separat vom Hilfsmotor 24a der Tretlagerschaltung 1 anbringbare Baueinheit ausgestaltet oder zusammen mit dem Hilfsmotor 24a zu einer Baueinheit vereint bzw. vormontiert sein.

An der Eingangsstufe 14, insbesondere dem antriebsseitigen Eingangsrad 16, werden der an der Tretlagerwelle 6 erzeugte Kraftfluss 2, der aus der Pedalbewegung eines Radfahrers stammt, und der Kraftfluss 2 vom Hilfsantrieb 22 zusammengeführt und zum Schaltgetriebe 4 geleitet. Der Freilauf 20 verhindert einen Kraftfluss vom Hilfsantrieb 22 zur Tretlagerwelle 6; er verhindert, dass der Hilfsantrieb 22 die Pedalarme und damit die Beine des Fahrradfahrers antreiben kann. Zwischen dem antriebsseitigen Eingangsrad 16 und der Tretlagerwelle 6, insbesondere zwischen dem Freilauf 20 und dem antriebsseitigen Eingangsrad 16, kann ein Drehmoment- und/oder Drehzahlsensor 26 angeordnet sein, der ein zur Steuerung des Hilfsantriebs 22 verwendbares Signal 28 ausgibt, das für ein am antriebsseitigen Eingangsrad 16 oder der Tretlagerwelle 6 anliegendes Drehmoment und/oder eine Drehzahl repräsentativ ist. Der Drehmoment- und Drehzahlsensor 26 kann in Bezug auf den Kraftfluss vor oder hinter dem Freilauf 20 angeordnet sein.

Das antriebsseitige Eingangsrad 16 sitzt mittelbar auf der Tretlagerwelle 6, indem es auf einer Hohlwelle 30, hier als eingangsseitige Hohlwelle bezeichnet, angeordnet ist, die koaxial zur Tretlagerwelle 6 angeordnet ist. Die Hohlwelle 30 kann über den Freilauf 20 mit der Tretlagerwelle 6 verbunden sein. Der Freilauf 20 und der Drehzahl- und/oder Drehmomentsensor 28, falls vorhanden, sind bevorzugt an der Hohlwelle angeordnet. Die Hohlwelle 30 kann auf der Tretlagerwelle 6 und/oder in einem Gehäuse 32 der Tretlagerschaltung 1 drehbar gelagert sein.

Alternativ (aber nicht beansprucht) kann das antriebsseitige Eingangsrad 16 auch unmittelbar auf der Tretlagerwelle 6 drehstarr befestigt sein. In diesem Fall kann sich der Freilauf 20 im oder am antriebsseitigen Eingangsrad 16 befinden sein, so dass eine Hohlwelle unnötig ist.

An einem Getriebeausgang 34 des Schaltgetriebes 4 befindet sich eine Ausgangsstufe 36. Die Ausgangsstufe 36 weist ein antriebsseitiges Ausgangsrad 38 und ein abtriebsseitiges Ausgangsrad 40 auf, die als ein Paar miteinander kämmender Stirnräder ausgestaltet sein können. Die Ausgangsstufe 36 ist als eine Untersetzung ausgestaltet, wobei das Untersetzungsverhältnis zwischen 1:2 und 1:4 beträgt.

Das antriebsseitige Ausgangsrad 38 sitzt bevorzugt auf einer Ausgangswelle 42 des Schaltgetriebes 4. Die Ausgangswelle 42 kann radial versetzt oder koaxial zur Eingangswelle 8 angeordnet sein. Eingangs- und Ausgangswelle des Schaltgetriebes können auf gegenüberliegenden Seiten des Schaltgetriebes 4 von außen zugänglich ausgestaltet sein. Alternativ kann auch die Eingangswelle 8 eine Hohlwelle sein, in der die Ausgangswelle 42 läuft oder die Ausgangswelle 42 ist als eine Hohlwelle ausgestaltet, in der die Eingangswelle läuft. Über die Ausgangswelle 42 wird der Kraftfluss 2 aus dem Schaltgetriebe 4 geführt.

Das abtriebsseitige Ausgangsrad 40 sitzt auf einer ausgangsseitigen Hohlwelle 44 der Tretlagerschaltung 1, die koaxial zur Tretlagerwelle 6 angeordnet ist. Die ausgangsseitige Hohlwelle 44 kann auf der Tretlagerwelle 6 und/oder im Gehäuse 32 gelagert sein.

An der ausgangsseitigen Hohlwelle 44 kann der Kraftfluss 2 von außerhalb der Tretlagerschaltung abgegriffen und zum Antrieb des Elektrofahrrades genutzt werden. Hierzu kann die ausgangsseitige Hohlwelle 44 ausgestaltet sein, ein Antriebsrad 48, wie beispielsweise ein Kettenblatt oder ein Zahnriemenrad, zu tragen. Über das Antriebsrad 48 und ein Zugmittel 50, wie eine Kette oder ein Zahnriemen, kann dann ein Hinterrad (in Fig. 1 nicht dargestellt) des Elektrofahrrades angetrieben werden.

Die eingangsseitige Hohlwelle 30 und die ausgangsseitige Hohlwelle 44 liegen in axialer Richtung 52 der Tretlagerwelle nebeneinander, ohne sich zu überlappen.

Das Gehäuse 32 der Tretlagerschaltung 1 ist bevorzugt als eine strukturelle Komponente eines Rahmens des Elektrofahrrads ausgestaltet. Als strukturelle Komponente nimmt das Gehäuse 32 die während des Betriebs im Rahmen auftretenden Kräfte auf. Bevorzugt versteift das Gehäuse 32 die Verbindung von Sattelrohr und Unterrohr sowie gegebenenfalls der Kettenstreben.

Das Gehäuse 32 umgibt wenigstens die Tretlagerwelle 6, das antriebsseitige Eingangsrad 16 und das abtriebsseitige Ausgangsrad 40. Sowohl die Tretlagerwelle 6 als auch die ausgangsseitige Hohlwelle 44 treten aus dem Gehäuse 32 aus, so dass sie von außerhalb des Gehäuses 32 zugänglich sind. Die ausgangsseitige Hohlwelle 44 tritt nur an einer Seite 54 aus dem Gehäuse 32, die Tretlagerwelle 6 zu beiden Seiten des Gehäuses 32. Die Tretlagerwelle 6 ragt dabei weiter aus dem Gehäuse als die ausgangsseitige Hohlwelle 44.

Das Schaltgetriebe 4 kann ein eigenes Gehäuse 56 aufweisen. In diesem Fall sind das Gehäuse 32 der Tretlagerschaltung 1 und das Gehäuse 56 des Schaltgetriebe 4 ausgestaltet, aneinander befestigt zu werden. Bevorzugt ist jedoch das Schaltgetriebe 4 in das Gehäuse 32 integriert bzw. in diesem ohne eigenes Gehäuse angeordnet. In diesem Fall kann das Gehäuse 56 entfallen. Das Gehäuse 32 stellt dann Lagerstellen 58 bereit, an denen die Getriebewellen des Schaltgetriebes 4 gelagert sind.

Der Hilfsantrieb 22 kann außen oder innen am Gehäuse 32 befestigt sein. Das Gehäuse 32 kann hierfür entsprechende Befestigungsmittel, beispielsweise Flansche, aufweisen. Bevorzugt ist jedoch auch hier der Hilfsantrieb 22, wenigstens aber das Untersetzungsgetriebe 24b, im Gehäuse 32 integriert bzw. innerhalb des Gehäuses 32 angeordnet.

Zur Anbringung im Bereich des Tretlagers des Elektrofahrrades ist das Gehäuse 32 mit Befestigungsstellen 60 versehen.

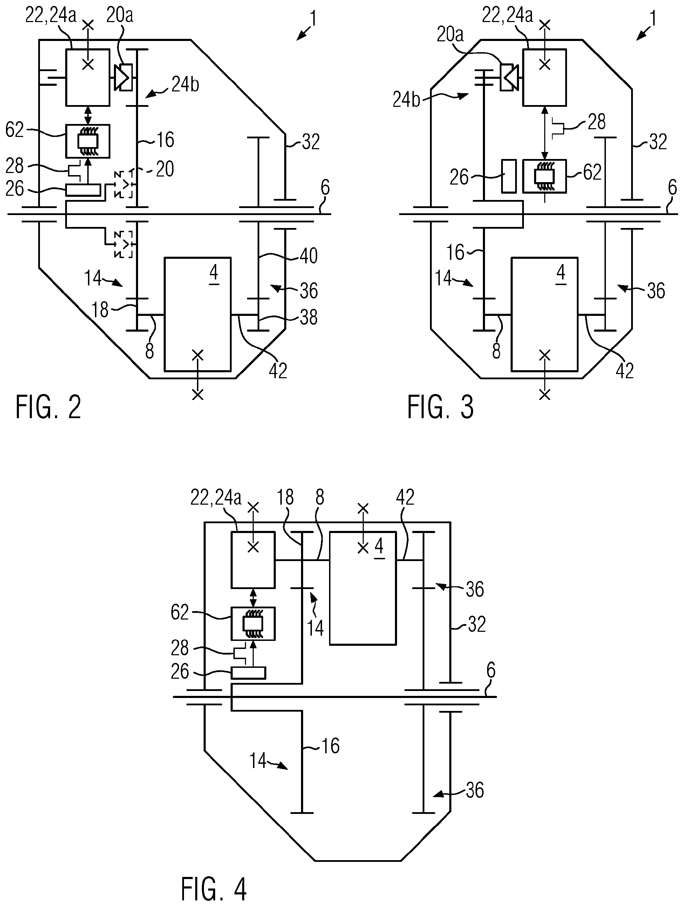

Die Fig. 2 bis 4 zeigen Tretlagerschaltungen 1, bei den im Unterschied zur Ausgestaltung der Fig. 1 das Schaltgetriebe 4 in Richtung parallel zur Tretlagerwelle 6 wenigstens teilweise zwischen der Eingangsstufe 14 und der Ausgangsstufe 36 angeordnet ist. Die Eingangswelle 8 und die Ausgangswelle 42 sind an sich gegenüberliegenden Seiten zugänglich. Hinsichtlich der Funktion sind die Tretlagerschaltungen 1 der Fig. 1 und 2 identisch. Der Hilfsantrieb 22 befindet sich bei den Ausgestaltungen der Fig. 2 bis 4 jeweils an unterschiedlicher Stelle.

In der Ausgestaltung der Fig. 2 ist der Freilauf 20 optional, was nicht beansprucht wird. Auf den Freilauf 20 kann verzichtet werden, wenn eine Steuereinheit 62 des Hilfsantriebs 22 betriebssicher und gegebenenfalls redundant so programmiert und/oder ausgestaltet ist, dass der Hilfsantrieb niemals die Tretlagerwelle 6 und somit die Beine des Fahrradfahrers antrieben kann.

Ein weiterer Freilauf 20a kann zwischen dem Hilfsantrieb 22 und der Eingangsstufe 16 angeordnet sein, beispielsweise auf einer Antriebswelle des Hilfsantriebs. Der weitere Freilauf 20a dreht frei, wenn die Eingangsstufe 16 den Hilfsmotor 22 überholt. Hierdurch wird verhindert, dass der Hilfsantrieb 22 vom Fahrradfahrer als Generator betrieben wird. Auch auf den Freilauf 20a kann verzichtet werden, wenn eine Steuereinheit 62 des Hilfsantriebs 22 betriebssicher und gegebenenfalls redundant so programmiert und/oder ausgestaltet ist, dass der Hilfsantrieb durch freies Hochdrehen ohne Last nicht in den Generatorbetrieb übergehen kann und auf diese Weise dem Fahrradfahrer keine Energie rauben kann.

Wie Fig. 2 zeigt, kann der Hilfsantrieb 22 kann zumindest abschnittsweise räumlich zwischen der Eingangsstufe 14 und dem Gehäuse 32 angeordnet sein, so dass sich die Eingangsstufe 14 räumlich zwischen der Ausgangsstufe 36 und dem Hilfsantrieb 22 befindet.

Wie in Fig. 2 ferner beispielhaft gezeigt ist, kann das antriebsseitige Eingangsrad 16 Teil eines einstufigen Untersetzungsgetriebes 24b sein. Auf ein als separates Bauteil ausgestaltetes Untersetzungsgetriebe wie bei der vorangegangenen Ausgestaltung kann somit verzichtet werden. Der Hilfsantrieb 22 ist so noch stärker in die Tretlagerschaltung 1 baulich integriert.

Wie Fig. 3 zeigt, kann der Hilfsantrieb 22 zumindest abschnittsweise räumlich zwischen der Eingangsstufe 14 und der Ausgangsstufe 36 angeordnet sein. Bei einer solchen Anordnung ist es von Vorteil wenn der Drehmoment- und/oder Drehzahlsensor 26 und/oder der Freilauf 20 sich ebenfalls zwischen der Eingangsstufe 14 und der Ausgagsstufe 36 befindet.

Wie in Fig. 4 beispielhaft gezeigt ist, kann das abtriebsseitige Eingangsrad 18 koaxial zur Eingangswelle 8 angeordnet sein. Hierdurch wird mindestens ein Zahnrad eingespart.

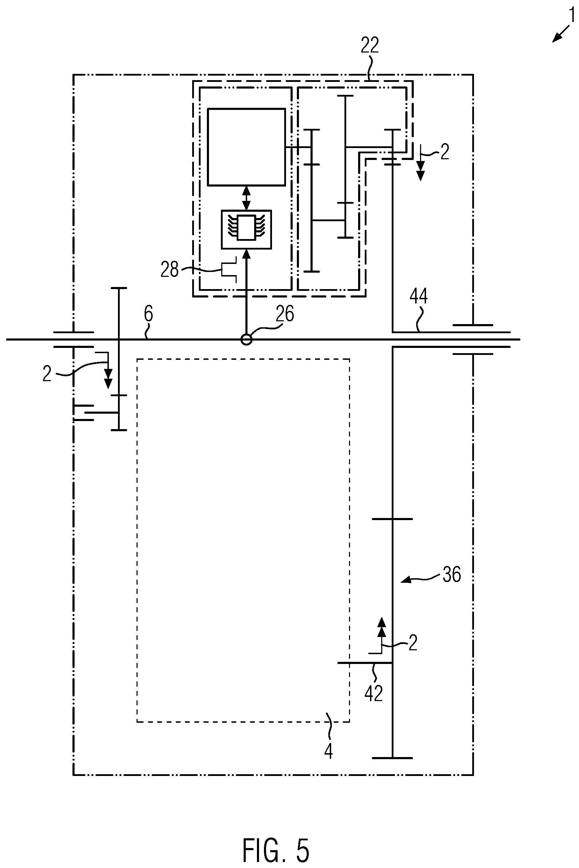

Bei der Ausgestaltung der Fig. 5 werden der Kraftfluss 2 vom Hilfsantrieb 22 und der Kraftfluss 2 von der Tretlagerwelle 6 an der Ausgangsstufe 36 und nicht, wie bei den vorangegangenen Ausgestaltungen an der Eingangsstufe 14 zusammengeführt. Der Freilauf 20 befindet sich zwischen dem Schaltgetriebe 4 und der ausgangsseitigen Hohlwelle 44 beispielsweise an der Ausgangswelle 42 des Schaltgetriebes 4. Der Drehzahl- und/oder Drehmomentsensor 26 kann, wie bei der Ausgestaltung der Fig. 1 an der Tretlagerwelle 6 angeordnet sein. Im Übrigen entsprechen Funktion und Aufbau der Ausgestaltung der Fig. 5 denen der Ausgestaltung der Fig. 1.

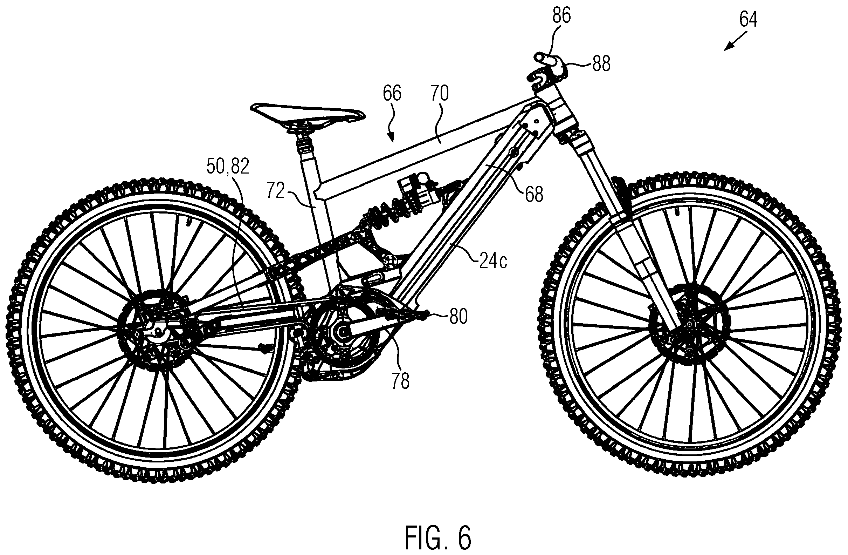

Fig. 6 zeigt die Tretlagerschaltung 1 an einem hier betriebsbereiten Elektrofahrrad 64. Das Elektrofahrrad 64 weist beispielsweise einen diamantförmigen Rahmen 66 mit einem Unterrohr 68, einem Oberrohr 70 und einem Sitzrohr 72 auf. Am Unterrohr 68 oder einer anderen Stelle des Rahmens 66 kann eine Batterie 24c des Hilfsantriebs angeordnet sein. Die Tretlagerschaltung 1 bildet das Tretlager und ist in dem Bereich , in dem das Unterrohr 68 und das Sitzrohr 72 miteinander verbunden sind, angeordnet. Das Gehäuse 32 versteift den Rahmen 66 im Bereich und ist damit ein tragender Teil des Rahmens 66.

An der Tretlagerwelle 6 sind in Fig. 6 Kurbeln 78 angebracht, die Pedale 80 tragen. Auf der einen Seite 54 der Tretlagerschaltung 1 ist räumlich zwischen der dortigen Kurbel 78 und dem Gehäuse 32 auf der ausgangsseitigen Hohlwelle 44 eine Zahnriemenscheibe als Antriebsrad 48 angebracht. Das Antriebsrad 48 treibt über einen Zahnriemen 82 das Hinterrad des Elektrofahrrades 64 an. Selbstverständlich kann anstelle des dargestellten Zahnriementriebs auch ein Kettentrieb verwendet werden.

Über ein Schaltelement 86 am Lenker 88 des Elektrofahrrades 64 wird das Schaltgetriebe 4 geschaltet.

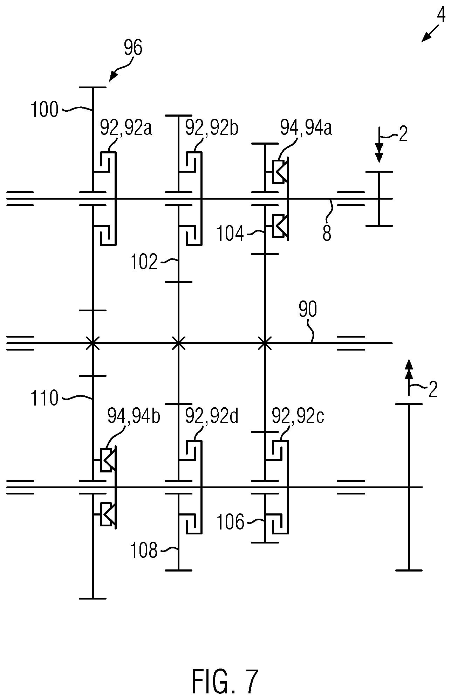

Mit Bezug auf die Fig. 7 ist im Folgenden ein Schaltgetriebe 4 kurz hinsichtlich Aufbau und Funktion beschrieben. Grundsätzlich kann auch ein anderes als das dargestellte Schaltgetriebe 4 verwendet werden. Das Schaltgetriebe 4 sollte jedoch wenigstens zwei Getriebewellen, nämlich die Eingangswelle 8 und die Ausgangswelle 42 aufweisen, die beide bevorzugt parallel und beabstandet zur Tretlagerwelle 6 angeordnet sind.

Bevorzugt weist das Schaltgetriebe wenigstens sechs, weiter bevorzugt wenigstens neun Gänge auf. Das Schaltgetriebe 4 kann wenigstens eine weitere Getriebewelle 90 aufweisen, die insbesondere parallel zur Eingangswelle 8 angeordnet ist.

Zum Schalten der einzelnen Gänge können Schaltkupplungen 92 und Freiläufe 94 vorgesehen sein, die durch Betätigung des Schaltelements 86 (Fig. 5) nach einem vorbestimmten Schema ein- oder ausgerückt werden können. Das in Fig. 7 gezeigte Schaltgetriebe 4 entspricht hinsichtlich Aufbau und (Schalt-)Funktion weitgehend dem in der DE 10 2004 045 364 B4 gezeigten und beschriebenen Schaltgetriebe.

Im Unterschied zum Schaltgetriebe der DE 10 2004 045 364 B4 ist jedoch des Tretlagerwelle 6 der Tretlagerschaltung 1 nicht gleichzeitig eine Getriebewelle, sondern das Schaltgetriebe 4 ist seitlich und parallel zur Tretlagerwelle 6 versetzt angeordnet. An der Stelle der Tretlagerwelle des Schaltgetriebes der DE 10 2004 045 364 B4 befindet sich in der Ausgestaltung der Fig. 7 die Eingangswelle 8 des Schaltgetriebes 4. Das Schaltgetriebe 4 der Fig. 7 weist außerdem wenigstens eine Schaltstufe 96 mehr auf als das Schaltgetriebe der Fig. 18 der DE 10 2004 045 364 B4, so dass mittels der drei Schaltstufen 96a, 96b, 96c insgesamt neun Gänge schaltbar sind.

Die einzelnen Schaltkupplungen sind im Folgenden mit 92a bis 92d und die Freiläufe mit 94a und 94b bezeichnet. Die Schaltkupplung 92a ist zwischen dem größten Zahnrad 100 auf der Eingangswelle 8 und der Eingangswelle 8 und die Schaltkupplung 92b zwischen dem zweitgrößten Zahnrad auf der Eingangswelle 8 und der Eingangswelle 8 angeordnet. Der Freilauf 94a ist zwischen dem kleinsten Zahnrad 104 auf der Eingangswelle 8 und der Eingangswelle angeordnet.

Die Schaltkupplung 92c ist zwischen dem kleinsten Zahnrad 106 auf der Ausgangswelle 42 und der Ausgangswelle 42 und die Schaltkupplung 92d zwischen dem zweitgrößten Zahnrad 108 auf der Ausgangswelle 42 und der Ausgangswelle 42 angeordnet. Der Freilauf 94b ist zwischen dem größten Zahnrad 110 auf der Ausgangswelle 42 und der Ausgangswelle 42 angeordnet.

Ist eine Schaltkupplung 92a bis 92d eingerückt, so ist das entsprechende Zahnrad 100-110 mit der entsprechenden Welle 8, 42 in Richtung des Kraftflusses 2, also in Richtung von der Eingangswelle 8 zur Ausgangswelle 42 drehstarr verbunden. Entgegen der Lastübertragungsrichtung kann das Zahnrad in Relation zu Welle frei drehen. Ist eine Schaltkupplung 92a bis 92d ausgerückt, so kann sich das entsprechende Zahnrad 100-110 gegenüber der entsprechenden Welle 8, 42 immer frei drehen.

Der Freilauf 94a dreht durch, wenn sich das Zahnrad 104 mindestens so schnell dreht wie die Eingangswelle 8. Versucht das Zahnrad 104 langsamer als die Eingangswelle 8 zu drehen, verbindet der Freilauf 94a das Zahnrad 104 und die Eingangswelle 8 drehstarr. Es kann an dieser Stelle nicht zu einem für den Fahrradfahrer gefährlichen Durchrutschen des Getriebes kommen, da der Freilauf 94a den Kraftfluss 2 vom Getriebeeingang zum Getriebeausgang immer überträgt.

Der Freilauf 94b dreht durch, wenn sich die Ausgangswelle 42 mindestens so schnell dreht wie das Zahnrad 110. Das ist immer dann der Fall, wenn eine der Kupplungen 92d oder 92c eingekoppelt sind. Ansonsten sind die Ausgangswelle 42 und das Zahnrad 110 drehstarr in Richtung des Kraftflusses 2 verbunden. Es kann an dieser Stelle nicht zu einem für den Fahrradfahrer gefährlichen Durchrutschen des Getriebes kommen, da der Freilauf 94b die Drehmomente immer überträgt.

Eine nicht dargestellte mechanische oder elektromechanische Schaltlogik schaltet die Schaltkupplungen 92 in einer vorbestimmten Abfolge, um beim Heraufschalten nacheinander Gänge mit ansteigendem Übersetzungsverhältnis und beim Herabschalten nacheinander Gänge mit abfallendem Übersetzungsverhältnis zu schalten.

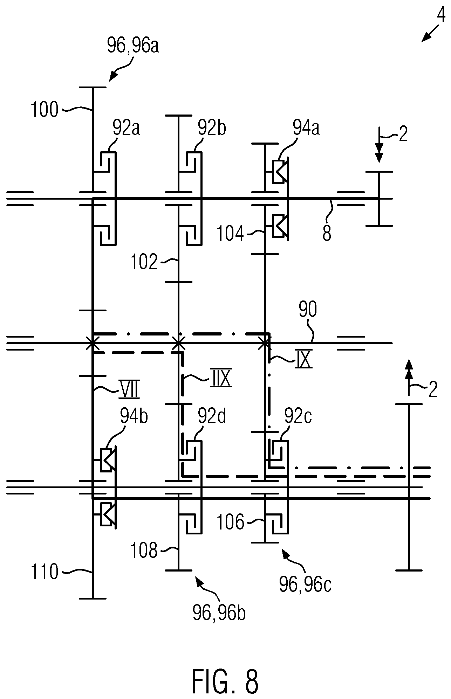

Fig. 8 zeigt den Kraftfluss 2 der obersten drei Gänge VII, IIX, IX, die geschaltet werden können, wenn die Schaltkupplung 92a des größten Zahnrades 100 auf der Eingangswelle 8 eingerückt und die Schaltkupplung 92b des zweitgrößten Zahnrades 102 auf der Eingangswelle 8 ausgerückt ist. Über die Getriebewelle 90 wird das kleinste Zahnrad 104 auf der Eingangswelle 8 mit der höchsten Drehzahl angetrieben, so dass der Freilauf 94a durchdreht. Der Kraftfluss verläuft folglich über das Zahnrad 100 zur weiteren Getriebewelle 90.

Wird die Schaltkupplung 92c am kleinsten Zahnrad 106 der Ausgangswelle 42 eingerückt und die Schaltkupplung 92d am zweitgrößten Zahnrad 108 ausgerückt, so läuft der Kraftfluss 2 vom Zahnrad 100 zum Zahnrad 104, entsprechend dem Gang IX, der die größte Übersetzung ins Schnelle des Schaltgetriebes 4 bereitstellt. Der Freilauf 94b dreht durch, da sich die Ausgangswelle 42 schneller dreht als das Zahnrad 110.

Wird die Schaltkupplung 92c ausgerückt und die Schaltkupplung 92d eingerückt, so dreht die Ausgangswelle 92c noch immer schneller als das Zahnrad 110 und der Freilauf 94b dreht durch. Der Kraftfluss 2 verläuft vom Zahnrad 100 zum Zahnrad 108, was Gang IIX entspricht.

Sind die Schaltkupplungen 92c und die Schaltkupplung 92d ausgerückt, wird die Ausgangswelle 42 vom Freilauf 94b mitgenommen. Der Kraftfluss 2 verläuft vom Zahnrad 100 zum Zahnrad 110, entsprechend Gang VII.

Die Gänge IV bis VI (nicht gezeigt) werden entsprechend geschaltet, wenn die Schaltkupplung 92a ausgerückt und die Schaltkupplung 92b eingerückt wird. Der Kraftfluss 2 verläuft dann über das Zahnrad 102, da das Zahnrad 94a schneller dreht als die Eingangswelle 8 und der Freilauf 94 folglich freidreht. Analog zu den Gängen VII bis IX wird bei Gang IV die Schaltkupplung 94b ein- und die Schaltkupplung 92d ausgerückt, bei Gang V die Schaltkupplung 92c aus- und die Schaltkupplung 92d eingerückt; bei Gang IV werden die Schaltkupplungen 92c und 92d ausgerückt und die Ausgangswelle 42 wird durch den Freilauf 94b mitgenommen.

Entsprechendes gilt für die Gänge I bis III (nicht gezeigt). Die Kupplungen 92a und 92b sind ausgerückt, so dass die Eingangswelle das Zahnrad 104 über den Freilauf 94a mitnimmt. Bei Gang III wird die Schaltkupplung 92c ein- und die Schaltkupplung 92d ausgerückt, bei Gang II die Schaltkupplung 92c aus- und die Schaltkupplung 92d eingerückt; bei Gang I werden die Schaltkupplungen 92c und 92d ausgerückt und die Ausgangswelle 42 wird durch den Freilauf 94 mitgenommen.

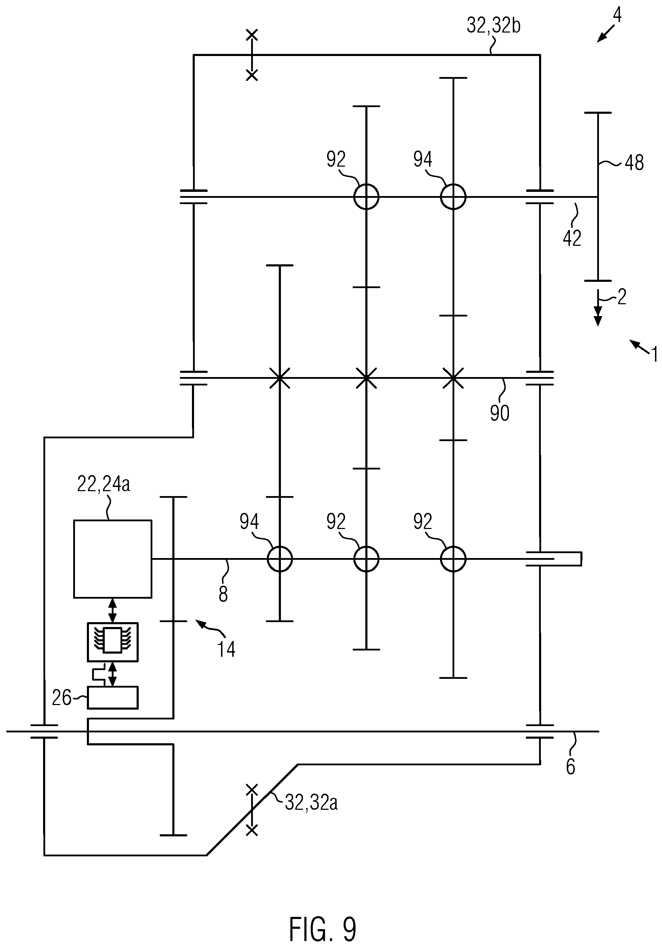

Eine weitere beispielhafte Ausgestaltung einer Tretlagerschaltung 1 ist in Fig. 9 dargestellt.

Die Tretlagerschaltung 1 weist ein Schaltgetriebe 4 mit sechs Gängen und einen elektrischen Hilfsantrieb 22 auf. Mindestens drei Getriebewellen 8, 90, 42 und die sind achsparallel zueinander angeordnet und sind mittelbar oder unmittelbar im Gehäuse 32 gelagert. Die Tretlagerschaltung 1 weist demnach insgesamt mindestens vier Wellen 6, 8, 42, 90 auf. Die Ausgangswelle 42 des Getriebes kann in diesem Fall den Ausgang der Tretlagerschaltung 1 bilden und ausgestaltet sein, das Antriebsrad 50 zu halten. Im Unterschied zu den vorangehend beschriebenen Ausgestaltungen ist keine ausgangsseitige Hohlwelle 44 vorhanden; deren Funktion ist von der Ausgangswelle 42 übernommen. Eine Ausgangsstufe 36 ist nicht vorhanden. Die Ausgangswelle 42 verläuft parallel zur Tretlagerwelle 6.

Die fehlende Ausgangsstufe kann durch eine Änderung der Übersetzung zwischen dem Antriebsrad 50 und dem Ritzel oder der Riemenscheibe (nicht gezeigt) am Hinterrad (Fig. 8) kompensiert werden. Durch diese Maßnahmen ist die Tretlagerschaltung 1 der Fig. 9 sehr leicht.

Die Eingangsstufe 4 sitzt auf der Tretlagerwelle 6. Wie bei der Ausgestaltung der Fig. 4 teibt der Hilfsmotor 4 direkt die Eingangswelle 8 an, wobei zwischen dem Schaltgetriebe 4 und dem Hilfsantrieb 22 ein Freilauf 20a (in Fig. 9 nicht gezeigt) vorhanden sein kann. Ein Untersetzungsgetriebe 24b muss nicht vorhanden sein.

Das Gehäuse 32 besteht aus mindestens zwei Gehäuseteilen 32a, 32b, die zusammen den Hilfsantrieb 22, das Schaltgetriebe 4, die Eingangsstufe 14 und die Tretlagerwelle umschließen.

Wie bei den übrigen Ausgestaltungen sind mindestens zwei der Wellen 6, 8, 42, 90 auf mindestens einer Seite aus dem Gehäuse 32 herausgeführt. Mindestens eine Welle, hier die Tretlagerwelle 6, ist auf zwei Seiten aus dem Gehäuse 32 herausgeführt. Wenigstens eine Welle, hier beispielsweise die Eingangswelle 8 alternativ jedoch eine andere Getriebewelle 90 oder die Ausgangswelle 42, ist koaxial zum Stator und Rotor eines Elektromotors angeordnet.

Auf mindestens drei Getriebewellen, beispielsweise der Eingangswelle 8, der Ausgangswelle 42 und einer weiteren Getriebewelle 90, befinden sich jeweils mindestens zwei Zahnräder.

Mindestens drei Zahnräder sind über Schaltkupplungen 92 und/oder Freiläufe 94 mit mindestens einer der Wellen 8, 90, 42 drehfest verbindbar.

Eine oder mehrere der Wellen 8, 90, 42 können auch als eine Hohlwelle ausgestaltet und koaxial zu einer oder mehreren Wellen aus der Gruppe umfassend die Tretlagerwelle 6, die Eingangswelle 8, wenigstens eine weitere Getriebewelle 90 und die Ausgangswelle 42 koaxial angeordnet sein. Auf jeder der mindestens vier Wellen 6, 8, 90, 42 befindet sich mindestens ein Zahnrad 100-110.

An mindestens einer der Wellen 6, 8, 90, 42 oder mindestens einem Zahnrad 100-110 befindet sich ein Drehzahl- und/oder Drehgeschwindigkeitssensor. An mindestens einer der Wellen 6, 8, 90, 42 oder mindestens einem Zahnrad 100-110 befindet sich ein Drehmomentsensor.

Auf wenigstens einer der Wellen 6, 8, 90, 42, beispielsweise der weiteren Getriebewelle 90, sind sämtliche darauf angebrachte Zahnräder vollständig drehfest mit dieser Welle verbunden. Mindestens zwei Wellen aus der Gruppe umfassend die Eingangswelle 8, wenigstens eine weitere Getriebewelle 90 und die Ausgangswelle 42 befinden sich bei im Elektrofahrrad 64 eingebauter Tretlagerschaltung 1 Fahrtrichtung vor der Tretlagerwelle 6.

### Bezugszeichen

- 1: Tretlagerschaltung
- 2: Kraftfluss
- 4: Schaltgetriebe
- 6: Tretlagerwelle
- 8: Eingangswelle
- 10: Getriebeeingang
- 14: Eingangsstufe
- 16: antriebsseitiges Eingangsrad
- 18: abtriebsseitiges Eingangsrad
- 20: Freilauf
- 20a: weiterer Freilauf
- 22: Hilfsantrieb
- 24a: Hilfsmotor
- 24b: Untersetzungsgetriebe
- 24c: Batterie
- 26: Drehmoment und/oder Drehzahlsensor
- 28: Drehmoment und/oder Drehzahlsignal
- 30: eingangsseitige Hohlwelle
- 32: Gehäuse der Tretlagerschaltung
- 32a: Gehäuseteil
- 32b: Gehäuseteil
- 34: Getriebeausgang
- 36: Ausgangsstufe
- 38: antriebsseitiges Ausgangsrad
- 40: abtriebsseitiges Ausgangsrad
- 42: Ausgangswelle des Schaltgetriebes
- 44: ausgangsseitige Hohlwelle
- 48: Antriebsrad
- 50: Zugmittel
- 52: axiale Richtung
- 54: Seite des Gehäuses
- 56: Gehäuse des Schaltgetriebes
- 58: Lagerstellen der Getriebewellen
- 60: Befestigungsstellen des Gehäuses
- 62: Steuereinheit des Hilfsantriebs
- 64: Elektrofahrrad
- 66: Rahmen
- 68: Unterrohr
- 70: Oberrohr
- 72: Sitzrohr
- 78: Kurbel
- 80: Pedal
- 82: Zahnriemen
- 86: Schaltelement
- 88: Lenker
- 90: weitere Getriebewelle
- 92, 92a, 92b, 92c, 92d: Schaltkupplung
- 94, 94a, 94b: Freilauf des Schaltgetriebes
- 96: Schaltstufe
- 100, 102, 104, 106, 108, 110: Zahnrad des Schaltgetriebes

## Patentansprüche

1. Tretlagerschaltung (1) für ein Elektrofahrrad (64) mit Hilfsantrieb (22),
mit einer Tretlagerwelle (6), einem Schaltgetriebe (4) und einer am Getriebeeingang (10) des Schaltgetriebes (4) angeordneten Eingangsstufe (14), wobei die Eingangsstufe (14) zwischen dem Schaltgetriebe (4) und der Tretlagerwelle (6) angeordnet und als eine Übersetzung ins Schnelle ausgebildet ist, wobei die Eingangsstufe (14) ein abtriebsseitiges Eingangsrad (18) auf einer Eingangswelle (8) des Schaltgetriebes (4) und ein antriebsseitiges, zur Tretlagerwelle (6) koaxiales Eingangsrad (16) aufweist, wobei das antriebsseitige Eingangsrad (16) auf einer eingangsseitigen Hohlwelle (30) sitzt, die auf der Tretlagerwelle (6) gelagert ist, wobei die Tretlagerschaltung (1) eine ausgangsseitige Hohlwelle (44) aufweist, an der ein Antriebsrad (48) für ein zu einem Hinterrad des Elektrofahrrades (64) reichendes Zugmittel (50) anbringbar ist, wobei die Tretlagerwelle (6) koaxial in der ausgangsseitigen Hohlwelle (44) verläuft, wobei die eingangsseitige Hohlwelle (30) und die ausgangsseitige Hohlwelle (44) nebeneinander auf der Tretlagerwelle (6) angeordnet sind, wobei die eingangsseitige Hohlwelle (30) und die ausgangsseitige Hohlwelle (44) in einer axialen Richtung (52) der Tretlagerwelle (6) ohne sich zu überlappen nebeneinander liegen, **dadurch gekennzeichnet, dass** zwischen der Eingangsstufe (14) und der Tretlagerwelle (6) ein Freilauf (20) angeordnet ist.

2. Tretlagerschaltung (1) nach Anspruch 1, wobei zwischen dem Freilauf (20) und dem antriebsseitigen Eingangsrad (16) ein Drehzahl- und/oder Drehgeschwindigkeitssensor (26), und/oder ein Drehmomentsensor (26) angeordnet ist.

3. Tretlagerschaltung (1) nach Anspruch 1 oder 2, wobei am Getriebeausgang des Schaltgetriebes (4) eine Ausgangsstufe (36) mit einem abtriebseitigen, zur Tretlagerwelle (6) koaxialen Ausgangsrad (40) und einem antriebsseitigem Ausgangsrad (38) auf einer Ausgangswelle (42) des Schaltgetriebes (4) aufweist.

4. Tretlagerschaltung (1) nach Anspruch 3, wobei das abtriebsseitige Ausgangsrad (40) die ausgangsseitige Hohlwelle (44) antreibt.

5. Tretlagerschaltung (1) nach Anspruch 3 oder 4, wobei die Ausgangsstufe (36) als eine Untersetzung ausgestaltet ist.

6. Tretlagerschaltung (1) nach einem der Ansprüche 1 bis 5, mit einem Gehäuse (32), in dem das Schaltgetriebe (4) und die Tretlagerwelle (6) aufgenommen sind und das ausgestaltet ist, den Hilfsantrieb (22) aufzunehmen.

7. Tretlagerschaltung (1) nach einem der Ansprüche 1 bis 6, wobei die Tretlagerschaltung (1) den Hilfsantrieb (22) aufweist und wobei ein Kraftfluss vom Hilfsantrieb (22) und ein Kraftfluss von der Tretlagerwelle (6) an der Eingangsstufe (14) überlagert sind.

8. Tretlagerschaltung (1) nach einem der Ansprüche 3 bis 5, wobei die Tretlagerschaltung (1) den Hilfsantrieb (22) aufweist und wobei ein Kraftfluss vom Hilfsantrieb (22) und ein Kraftfluss von der Tretlagerwelle (6) an der Ausgangsstufe (36) überlagert sind.

9. Tretlagerschaltung (1) nach Anspruch 7 oder 8, wobei der Hilfsantrieb (22) baulich in die Tretlagerschaltung (1) integriert ist.

10. Elektrofahrrad (64) mit einer Tretlagerschaltung (1) nach einem der Ansprüche 1 bis 9 im Bereich des Tretlagers.

## Claims

1. Bottom bracket gearshift (1) for an electric bicycle (64) with auxiliary drive (22),
with a bottom bracket shaft (6), a gearshift (4) and an input stage (14) arranged at the gearshift input (10) of the gearshift (4), wherein the input stage (14) is arranged between the gearshift (4) and the pedal bearing shaft (6) and is designed as a transmission into the fast gear, wherein the input stage (14) has an output-side input wheel (18) on an input shaft (8) of the gearshift (4) and a drive-side input gear (16) coaxial with the pedal bearing shaft (6), wherein the drive-side input gear (16) is mounted on an input-side hollow shaft (30) which is mounted on the pedal bearing shaft (6), wherein the bottom bracket gearshift (1) has an output-side hollow shaft (44) to which a drive wheel (48) for a traction means (50) extending to a rear wheel of the electric bicycle (64) can be attached, wherein the pedal bearing shaft (6) runs coaxially in the output-side hollow shaft (44), wherein the input-side hollow shaft (30) and the output-side hollow shaft (44) are arranged next to each other on the pedal bearing shaft (6), wherein the input-side hollow shaft (30) and the output-side hollow shaft (44) lie next to each other in an axial direction (52) of the pedal bearing shaft (6) without overlapping each other, **characterized in that** a freewheel (20) is arranged between the input stage (14) and the pedal bearing shaft (6).

2. Bottom bracket gearshift (1) according to claim 1, wherein a speed and/or rotational speed sensor (26) and/or a torque sensor (26) is arranged between the freewheel (20) and the drive-side input gear (16).

3. Bottom bracket gearshift (1) according to claim 1 or 2, wherein at the gearshift output of the gearshift (4) an output stage (36), with an output gear (40) on the output side, coaxial with the pedal bearing shaft (6) and an output gear (38) on the drive side on an output shaft (42) of the gearshift (4), is provided.

4. Bottom bracket gearshift (1) according to claim 3, wherein the output gear (40) on the output side drives the output-side hollow shaft (44).

5. Bottom bracket gearshift (1) according to claim 3 or 4, wherein the output stage (36) is designed as a reduction gear.

6. Bottom bracket gearshift (1) according to one of claims 1 to 5, with a housing (32) in which the gearshift (4) and the pedal bearing shaft (6) are accommodated and which is designed to accommodate the auxiliary drive (22).

7. Bottom bracket gearshift (1) according to one of claims 1 to 6, wherein the bottom bracket gearshift (1) has the auxiliary drive (22) and wherein a power flow from the auxiliary drive (22) and a power flow from the pedal bearing shaft (6) are superimposed at the input stage (14).

8. Bottom bracket gearshift (1) according to one of claims 3 to 5, wherein the bottom bracket gearshift (1) has the auxiliary drive (22) and wherein a force flow from the auxiliary drive (22) and a force flow from the pedal bearing shaft (6) are superimposed at the output stage (36).

9. Bottom bracket gearshift (1) according to claim 7 or 8, wherein the auxiliary drive (22) is structurally integrated into the bottom bracket gearshift (1).

10. Electric bicycle (64) with a bottom bracket gearshift (1) according to one of claims 1 to 9 in the area of the bottom bracket.

## Revendications

1. Dispositif de changement de vitesses de pédalier (1) pour un vélo électrique (64) avec entraînement auxiliaire (22),
avec un arbre de pédalier (6), une boîte de vitesses (4) et un étage d'entrée (14) disposé à l'entrée (10) de la boîte de vitesses (4), où l'étage d'entrée (14) est disposé entre la boîte de vitesses (4) et l'arbre de pédalier (6) et est configuré comme une transmission à grande vitesse, où l'étage d'entrée (14) présente une roue d'entrée (18) côté mené sur un arbre d'entrée (8) de la boîte de vitesses (4) et une roue d'entrée (16) côté menant, coaxiale à l'arbre de pédalier (6), où la roue d'entrée (16) côté menant repose sur un arbre creux (30) côté entrée, qui est logé sur l'arbre de pédalier (6), où le dispositif de changement de vitesses de pédalier (1) présente un arbre creux (44) côté sortie, sur lequel peut être attachée une roue d'entraînement (48) pour un moyen de traction (50) s'étendant vers une roue arrière du vélo électrique (64), où l'arbre de pédalier (6) s'étend coaxialement dans l'arbre creux (44) côté sortie, où l'arbre creux (30) côté entrée et l'arbre creux (44) côté sortie sont disposés côte à côte sur l'arbre de pédalier (6), où l'arbre creux côté entrée (30) et l'arbre creux côté sortie (44) sont juxtaposés dans une direction axiale (52) de l'arbre de pédalier (6) sans se chevaucher, **caractérisé en ce qu'**une roue libre (20) est disposée entre l'étage d'entrée (14) et l'arbre de pédalier (6).

2. Dispositif de changement de vitesses de pédalier (1) selon la revendication 1, où un capteur de fréquence de rotation et/ou de vitesse de rotation (26), et/ou un capteur de couple (26) est disposé entre la roue libre (20) et la roue d'entrée (16) côté menant.

3. Dispositif de changement de vitesse de pédalier (1) selon la revendication 1 ou 2, où à la sortie de boîte de vitesses de la boîte de vitesses (4), un étage de sortie (36) avec une roue de sortie (40) côté mené, coaxiale à l'arbre de pédalier (6) et une roue de sortie (38) côté menant est fourni sur un arbre de sortie (42) de la boîte de vitesses (4).

4. Dispositif de changement de vitesses de pédalier (1) selon la revendication 3, où la roue de sortie (40) côté mené entraîne l'arbre creux (44) côté sortie.

5. Dispositif de changement de vitesses de pédalier (1) selon la revendication 3 ou 4, où l'étage de sortie (36) est configuré comme une transmission à basse vitesse.

6. Dispositif de changement de vitesses de pédalier (1) selon l'une des revendications 1 à 5, avec un boîtier (32) dans lequel sont reçus la boîte de vitesses (4) et l'arbre de pédalier (6) et qui est configuré pour recevoir l'entraînement auxiliaire (22).

7. Dispositif de changement de vitesses de pédalier (1) selon l'une des revendications 1 à 6, où le dispositif de changement de vitesses de pédalier (1) comprend l'entraînement auxiliaire (22) et où un flux de force provenant de l'entraînement auxiliaire (22) et un flux de force provenant de l'arbre de pédalier (6) sont superposés à l'étage d'entrée (14).

8. Dispositif de changement de vitesses de pédalier (1) selon l'une des revendications 3 à 5, où le dispositif de changement de vitesses de pédalier (1) comprend l'entraînement auxiliaire (22) et où un flux de force provenant de l'entraînement auxiliaire (22) et un flux de force provenant de l'arbre de pédalier (6) sont superposés à l'étage de sortie (36).

9. Dispositif de changement de vitesses de pédalier (1) selon la revendication 7 ou 8, où l'entraînement auxiliaire (22) est intégré structurellement dans le dispositif de changement de vitesses de pédalier (1).

10. Vélo électrique (64) avec un dispositif de changement de vitesses de pédalier (1) selon l'une des revendications 1 à 9 dans la région du pédalier.
